# EUROPÄISCHE PATENTSCHRIFT

(11) **EP 3 318 433 B1**
(45) Veröffentlichungstag und Bekanntmachung des Hinweises auf die Patenterteilung: **21.08.2019**
(21) Anmeldenummer: 17194928.2
(22) Anmeldetag: 05.10.2017
(51) Int. Cl.: B60H 1/00, B60H 1/24

(54) **FAHRZEUG MIT EINER FAHRZEUGLÜFTUNG**
VEHICLE WITH VEHICLE VENTILATION
VÉHICULE DOTÉ D'UNE VENTILATION DE VÉHICULE

(30) Priorität: 26.10.2016 DE 102016012800
(43) Veröffentlichungstag der Anmeldung: 09.05.2018
(73) Patentinhaber: MAN Truck & Bus SE, 80995 München (DE)
(72) Erfinder: Koch, Christian, 80637 München (DE); Holzinger, Vinzenz, 80993 München (DE)
(74) Vertreter: v. Bezold & Partner Patentanwälte - PartG mbB

(56) Entgegenhaltungen:
- DE-A1- 2 164 857
- DE-A1- 19 950 148
- DE-U- 1 780 495
- JP-U- S61 133 414

## Beschreibung

Die Erfindung betrifft ein Fahrzeug, insbesondere Nutzfahrzeug, mit einer Fahrzeuglüftung zum Entlüften eines Fahrzeuginnenraums.

Grundsätzlich sind Fahrzeuglüftungen zum Entlüften des Fahrzeuginnenraums z. B. aus den Druckschriften DE 35 33 047 A1, DE 10 227 363 A1 und DE 19 831 435 A1 bekannt. Typischerweise umfassen gattungsgemäße Fahrzeuglüftungen einen Entlüftungskanal mit einer dem Fahrzeuginnenraum zugewandten Einlassöffnung und mit einer Auslassöffnung, die einer das Fahrzeug umgebenden Fahrzeugumgebung zugewandt ist. Über den Entlüftungskanal wird dann ein Luftstrom vom Fahrzeuginnenraum nach außen in die Fahrzeugumgebung geleitet.

Aus der DE 17 80 495 U ist eine Entlüftungseinrichtung für ein Fahrzeug bekannt, wobei im Dach an einer Stelle größtmöglichen Unterdrucks eine oder mehrere unverdeckte Luftaustrittsöffnungen vorgesehen sind, unter denen ein Leitblech für die Führung der austretenden Luft angeordnet ist, wobei dessen vordere Kante als Wasserfangrinne ausgebildet ist.

Das Dokument DE199 50 148 A1 offenbart eine Fahrzeugentlüftung mit einer Einlassöffnung in einem an eine Frontscheibe angrenzenden Bereich.

Neben der Entlüftung umfasst der Fahrzeuginnenraum regelmäßig weitere Vorrichtungen zur Luftzirkulation innerhalb des Fahrzeuginnenraums. So ist zum Beispiel regelmäßig in ein Armaturenbrett des Fahrzeugs ein Gebläse eingelassen, mit dem trockene Luft gegen ein unteres Ende einer Frontscheibe geblasen wird, woraufhin die trockene Luft entlang einer Innenseite der Frontscheibe nach oben in Richtung des Fahrzeugdachs strömt bzw. aufsteigt. Damit wird in der Regel das Ziel verfolgt, mittels der trockenen Luft die Frontscheibe zu enteisen bzw. einem Zustand, in dem die Frontscheibe beschlagen ist, entgegenzuwirken. Allerdings kann es abhängig von der Größe der Frontscheibe und/oder einem Leistungsvermögen des Gebläses, mit dem der trockene Luftstrom auf die Innenseite der Frontscheibe gerichtet wird, dazu kommen, dass der entlang der Innenseite der Frontscheibe strömende Luftstrom aus trockener Luft abreißt, bevor er das obere Ende der Frontscheibe erreicht. Folge dieses vorzeitigen Abreißens des Luftstroms ist eine nur bereichsweise erfolgende Enteisung bzw. Beseitigung des Zustands, in dem die Frontscheibe beschlagen ist. Es ist daher eine Aufgabe der vorliegenden Erfindung, eine Fahrzeuglüftung bereitzustellen, mit der der Fahrzeuginnenraum entlüftet werden kann und mit der eine wirkungsvolle Scheibenenteisung möglich ist.

Diese Aufgabe wird durch eine Fahrzeuglüftung mit den Merkmalen des unabhängigen Anspruchs gelöst. Vorteilhafte Ausführungsform und Anwendungen der Erfindung ergeben sich aus den anhängigen Ansprüchen und werden in der folgenden Beschreibung unter teilweise Bezugnahme auf die Figuren näher erläutert.

Gemäß einem ersten Gesichtspunkt der Erfindung wird eine Fahrzeuglüftung, insbesondere eine gebläsefreie Fahrzeuglüftung, zum Entlüften eines Fahrzeuginnenraums eines Fahrzeugs bereitgestellt. Die Fahrzeuglüftung ist dabei in eine Fahrzeugwandung integriert. Dabei umfasst die Fahrzeuglüftung zur Führung eines Luftstroms einen Entlüftungskanal, der wiederum eine Einlassöffnung, die dem Fahrzeuginnenraum zugewandt ist, und eine Auslassöffnung, die einer das Fahrzeug umgebenden Fahrzeugumgebung zugewandt ist, aufweist. Beim Entlüften wird der Luftstrom dabei von der Einlassöffnung zur Auslassöffnung geleitet. Um eine Frontscheibenenteisung zu unterstützen bzw. einem Zustand entgegenzuwirken, in dem die Frontscheibe beschlagen ist, ist die Einlassöffnung in einem an die Frontscheibe angrenzenden Bereich angeordnet, so dass ein vorzeitiges Abreißen eines die Frontscheibenenteisung bewirkenden Luftstroms vermieden werden kann.

Hierbei ist es vorstellbar, dass die Einlassöffnung im Bereich einer Fahrzeugsäule, insbesondere der A-Säule, an die Fensterscheibe angrenzend angeordnet ist und sich die Fahrzeuglüftung zumindest teilweise innerhalb der A-Säule erstreckt.

Gemäß einer bevorzugten Ausführungsform der vorliegenden Erfindung ist vorgesehen, dass die Einlassöffnung in einem an einen oberen Endbereich der Frontscheibe angrenzenden Bereich angeordnet ist, beispielsweise benachbart und/oder angrenzend zum oberen Ende der Frontscheibe angeordnet ist. Hierbei ist die Fahrzeuglüftung vorzugsweise in ein Fahrzeugdach des Fahrzeugs integriert. Denkbar ist auch, dass die Einlassöffnung in eine Kanalwandung, wie z. B. in die A-Säule, integriert ist und die Auslassöffnung in das Fahrzeugdach.

Gegenüber den aus dem Stand der Technik bekannten Fahrzeuglüftungen hat die erfindungsgemäße Fahrzeuglüftung, bei der die Einlassöffnung des Entlüftungskanals in einem an die Frontscheibe angrenzenden Bereich angeordnet ist, den Vorteil, dass ein Luftstrom im Bereich der Frontscheibe beim Entlüften räumlich gezielt abgesaugt wird, wodurch ein vorzeitiges Abreißen eines an einer Innenseite der Frontscheibe in Richtung der Fahrzeugwandung strömenden Luftstroms besser vermieden werden kann. Dieser Effekt ist besonders ausgeprägt, wenn die Einlassöffnung in einem an einen oberen Endbereich der Frontscheibe angrenzenden Bereich und/oder an einem seitlich oberen Bereich der Frontscheibe angeordnet ist.

Folge dieser dem vorzeitigen Abreißen des Luftstroms entgegenwirkenden Maßnahme ist eine im Wesentlichen vollständige Frontscheibenenteisung bzw. Beseitigung des Zustands, in dem die Frontscheibe an ihrer Innenseite am oberen Ende beschlagen ist, da die trockene Luft bis zum oberen Ende geführt werden kann. Ferner ist die Einlassöffnung wegen ihrer Ausrichtung an der Frontscheibe in der Nähe eines Fahrerarbeitsplatzes angeordnet, so dass im Bereich des Fahrerarbeitsplatzes zudem ein ausreichender Luftaustausch sichergestellt werden kann.

Vorzugsweise ist die Fahrzeugentlüftung in einem bei einer Vorwärtsfahrt in Fahrtrichtung gesehenen vorderen Bereich der Fahrzeugwandung, insbesondere des Fahrzeugdachs, integriert. Insbesondere bildet die Fahrzeuglüftung - beispielsweise mit einer Kanalwandung des Entlüftungskanals - einen Teil des Fahrzeugdachs. Dabei ist die Auslassöffnung Teil einer Außenseite der Fahrzeugwandung bzw. in eine Außenverkleidung der Fahrzeugwandung eingelassen. Ferner ist es vorzugsweise vorgesehen, dass sich der Entlüftungskanal im Wesentlichen horizontal erstreckt und die aus der Auslassöffnung austretende Luft bei der Vorwärtsfahrt des Fahrzeugs im Wesentlichen parallel zur vom Fahrwind vorgegebenen Richtung die Auslassöffnung verlässt. Weiterhin ist es vorzugsweise vorgesehen, dass die Auslassöffnung in einer senkrecht zur Fahrzeugquerrichtung und senkrecht zur Fahrzeuglängsrichtung verlaufenden Richtung oberhalb der Einlassöffnung angeordnet ist. Insbesondere ist es vorgesehen, dass die Einlassöffnung an ein Auflageelement angrenzt, auf dem die Frontscheibe aufliegt. Grundsätzlich ist es vorstellbar, dass es sich beim dem Fahrzeug um ein Flugzeug und um bei der Frontscheibe um ein Cockpitfenster handelt.

Gemäß einer weiteren Ausführungsform der vorliegenden Erfindung ist vorgesehen, dass zum Entlüften des Fahrzeuginnenraums die Fahrzeugwandung und die Auslassöffnung derart ausgestaltet sind, dass sich bei einer Vorwärtsfahrt ein Unterdruck an der Auslassöffnung ausbildet. Durch den Unterdruck in der Auslassöffnung lässt sich ein von der Einlassöffnung auf die Auslassöffnung gerichteter Luftstrom im Entlüftungskanal bewirken, mit dem sich der Fahrzeuginnenraum passiv entlüften lässt. Dieser kann zu Verbesserung der Klimaanlageneffizienz beitragen. Während eine Klimaanlage bei einem stehenden Fahrzeug durch einen erzeugten Überdruck für eine Entlüftung und Scheibenklarung sorgt, wird der von der Klimaanlage erzeugte Überdruck beim fahrenden Fahrzeug vorteilhaft durch den Unterdruck an der Auslassöffnung unterstützt. Zudem kann auf ein zusätzliches Gebläse im Entlüftungskanal verzichtet werden. Insbesondere ist es vorgesehen, dass die Position der Auslassöffnung bestimmt ist von den bei der Vorwärtsfahrt entstehenden Unterdruckbereichen an der Fahrzeugwandung, d. h. die Auslassöffnung ist an derjenigen Position in die Fahrzeugwandung bzw. in die Außenverkleidung der Fahrzeugwandung eingelassen, in der bei einer Vorwärtsfahrt mit einem Unterdruckgebiet zu rechnen ist.

Gemäß einer weiteren Ausführungsform der vorliegenden Erfindung ist vorgesehen, dass zur Unterstützung eines sich bei einer Vorwärtsfahrt ausbildenden Druckunterschieds zwischen der Fahrzeugumgebung im Bereich der Einlassöffnung und dem Fahrzuginnenraum im Bereich der Auslassöffnung eine Außenseite der Fahrzeugwandung, insbesondere eine der Fahrzeugumgebung zugewandte Kanalwandung des Entlüftungskanals, konvex gekrümmt ist. Vorzugsweise handelt es sich bei der Außenseite der Fahrzeugwandung oder bei der der Fahrzeugumgebung zugewandten Kanalwandung um die Außenverkleidung der Fahrzeugwandung. Durch die Krümmung lässt sich bei der Vorwärtsfahrt ein Fahrtwind derart umleiten, dass sich diejenigen gewünschten Strömungsverhältnisse an der Fahrzeugwandung, insbesondere am Fahrzeugdach, einstellen, die letztendlich zu der Bildung der Unterdruckgebiete im Bereich der Auslassöffnung führen. Der erzeugte Druckunterschied erweist sich hierbei ferner insofern vorteilhaft, als dass er einen von der Klimaanlage erzeugten Überdruck, der beim stehenden Fahrzeug die Entlüftung und die Scheibenklarung sicherstellt, beim fahrenden Fahrzeug unterstützt.

Gemäß einer weiteren Ausführungsform der vorliegenden Erfindung ist vorgesehen, dass die Fahrzeuglüftung in eine Bugdachkuppel des Fahrzeugs integriert ist. Die Bugdachkuppel ist dabei der bei einer Vorwärtsfahrt in Fahrtrichtung gesehen vorderste Teil des Fahrzeugs und tritt mit zumindest einer Seite bei der Vorwärtsfahrt dem Fahrwind entgegen. Dabei ist es vorstellbar, dass die Bugdachkuppel als solches ein einzelnes Bauteil ist, das zur Bildung eines vorderen Fahrzeugbereichs an einer Karosserie bzw.an einem Fahrgestellrahmen des Fahrzeugs montiert ist. Gemäß einer Variante dieser Ausführungsform ist die Bugdachkuppel zur Ausbildung des Entlüftungskanals zweischalig ausgebildet. Buchdachkuppeln sind insbesondere aus dem Nutzfahrzeugbereich bekannt und kommen beispielsweise bei Lastkraftwagen oder Omnibussen zum Einsatz.

Gemäß einer weiteren Ausführungsform der vorliegenden Erfindung ist vorgesehen, dass sich die Einlassöffnung an der Frontscheibe über mehr als 50 %, bevorzugt über mehr als 60 % und besonders bevorzugt über mehr als 75 % einer Länge einer Fronscheibenkante erstreckt, wobei insbesondere die Einlassöffnung entlang einer durch die Frontscheibenkante vorgegebenen Richtung durchgehend oder unterbrochen ausgestaltet ist. Hierbei begrenzen die Frontscheibenkanten die Frontscheibe, beispielsweise in Fahrzeugquerrichtung gesehen. Je breiter sich die Eingangsöffnung entlang der Fronschreibe erstrecken lässt, desto größer ist der Bereich, in dem ein Abriss der entlang der Innenseite der Frontscheibe geführten Strömung verhindert werden kann. Durch Unterbrechung der Erstreckung der Einlassöffnung kann in vorteilhafter Weise auf weitere Bauteile der Innenausstattung, wie z. B. auf einen an einer Unterseite des Fahrzeugdachs angebrachten Rückspiegel, Rücksicht genommen werden. Vorzugsweise verläuft die maßgebliche Frontscheibenkante im Wesentlichen parallel zur Fahrzeugquerrichtung.

Gemäß einer weiteren Ausführungsform der vorliegenden Erfindung ist vorgesehen, dass der Entlüftungskanal zum Schutz vor in den Fahrzeuginnenraum tretendem Wasser zwischen der Einlassöffnung und der Auslassöffnung Wasserbarrieren aufweist. Mittels der Wasserbarrieren lässt sich in vorteilhafter Weise vermeiden, dass Wasser durch den Entlüftungskanal in den Fahrzeuginnenraum gelangt. Insbesondere wird hierbei einem Wasserstrom entgegengewirkt, der dem Luftstrom beim Entlüften im Entlüftungskanal andernfalls entgegengerichtet wäre. Vorzugsweise sind die Wasserbarrieren zum Schutz vor in den Fahrzeuginnenraum tretendem Wasser als Damm oder Wall ausgestaltet, der eine Fortsetzung des Wasserstroms solange entgegenwirkt, bis ein Wasserpegel des vom Wasserstrom geführten Wassers den Damm bzw. Wall überschreitet. Vorzugsweise erstreckt sich der Damm bzw. der Wall in Fahrzeugquerrichtung gesehen über eine vollständige Breite des Entlüftungskanals.

Gemäß einer weiteren Ausführungsform der vorliegenden Erfindung ist vorgesehen, dass zur Bildung der Wasserbarrieren eine dem Fahrzeuginnenraum zugewandte Kanalwandung gewölbt ist, insbesondere in den Entlüftungskanal hineinragend gewölbt ist, oder einen in den Entlüftungskanal hineinragenden Vorsprung aufweist. Durch eine Wölbung der dem Fahrzeuginnenraum zugewandten Kanalwandung kann auf zusätzliche massive Bauteile zur Ausbildung der Wasserbarrieren verzichtet werden, so dass die Gewichtszunahme bei der Ausbildung der Wasserbarrieren in dieser Ausführungsform möglichst gering gehalten werden kann.

Gemäß der vorliegenden Erfindung ist vorgesehen, dass der Entlüftungskanal zum Schutz vor in den Fahrzeuginnenraum tretendem Wasser zwischen der Einlassöffnung und der Auslassöffnung ein System aus mehreren Wasserbarrieren, insbesondere aus mehreren aufeinanderfolgenden Wasserbarrieren, aufweist. Dabei können die jeweils einen Damm bildenden Wasserbarrieren unterschiedlich weit in den Entlüftungskanal hineinragen. Es ist aber auch vorstellbar, dass Oberseiten der Dämme, die die einzelnen Wasserbarrieren bilden, zueinander fluchtend angeordnet sind. Weiterhin ist es vorzugsweise vorgesehen, dass die Einlassöffnung in der senkrecht zur Fahrzeugquerrichtung und senkrecht zur Fahrzeuglängsrichtung gesehenen Richtung unterhalb des Systems aus Wasserbarrieren im Entlüftungskanal angeordnet ist.

Gemäß der vorliegenden Erfindung ist vorgesehen, dass zwischen Wasserbarrieren des Systems aus mehreren Wasserbarrieren eine Senke zum Sammeln von Wasser ausgebildet ist. In der Senke lässt sich in vorteilhafter Weise dasjenige Wasser sammeln, das die in Richtung des Wasserstroms vor der Senke angeordnete Wasserbarriere überwunden hat. Mit zunehmender Zahl an Wasserbarrieren lässt sich der Schutz vor in den Fahrzeuginnenraum tretendem Wasser weiter verbessern. Außerdem erlaubt die Verteilung des Schutzes auf mehrere Wasserbarrieren mit vorzugsweise mehreren Senken, dass die Fahrzeuglüftung vergleichsweise flach ausgestaltet werden kann und entsprechend wenig nutzbarer Raum im Fahrzeuginnenraum durch die Fahrzeuglüftung verloren geht.

Gemäß einer weiteren Ausführungsform der vorliegenden Erfindung ist vorgesehen, dass der Entlüftungskanal zur Drainage des durch die Wasserbarriere gesammelten Wassers einen Ablauf, z. B. in Form eines Schlauchs, eines Drainagekanals und/oder eines Rillensystems, aufweist, wobei die dem Fahrzeuginnenraum zugewandte Kanalwandung insbesondere zur Unterstützung des Ablaufs schräg gegenüber einer horizontalen Ebene verläuft. Das Ableiten bzw. Abführen des Wassers garantiert die dauerhafte Nutzung der Wasserbarriere, da dadurch vermieden wird, dass sich auf Dauer so viel Wasser vor den Wasserbarrieren sammelt, dass der Wasserpegel die Wasserbarriere überschreitet. Vorzugsweise wird das Wasser zur Fahrzeugseite geleitet, indem das Fahrzeugdach oder die dem Fahrzeuginnenraum zugewandte Kanalwandung zur Fahrzeugseite hin nach unten geneigt ist. Es ist auch vorstellbar, dass das Ablaufen durch Pumpenelemente veranlasst oder unterstützt wird. Gemäß einer weiteren Ausführungsform der vorliegenden Erfindung ist vorgesehen, dass die Fahrzeuglüftung eine der Fahrzeugumgebung zugewandte erste Schale und eine dem Fahrzeuginnenraum zugewandte zweite Schale umfasst, wobei insbesondere die der Fahrzeugumgebung zugewandte erste Schale einen Teil der Fahrzeugwandung, insbesondere des Fahrzeugdachs, und die dem Fahrzeuginnenraum zugewandte zweite Schale zur Ausbildung der Wasserbarriere strukturiert ist. Mittels der ersten Schale und der zweiten Schale lässt sich auf unkomplizierte Weise ein Entlüftungskanal bereitstellen. Hierbei ist es vorgesehen, dass ein sich im zusammengebauten Zustand zwischen der ersten Schale und der zweiten Schale ausbildender Hohlraum den Entlüftungskanal oder einen Teil des Entlüftungskanals bildet. Die zweischalige Gestaltung der Fahrzeuglüftung ist zudem vorteilhaft in Hinblick auf eine thermische Isolation des Bugbereichs und kann einer Kondenswasserbildung entgegenwirken.

Gemäß einer weiteren Ausführungsform der vorliegenden Erfindung ist vorgesehen, dass im Bereich der Auslassöffnung oder in der Auslassöffnung ein Fremdkörperhindernis zur Vermeidung eines Eindringens von Fremdkörpern in den Entlüftungskanal angeordnet ist, wobei das Fremdkörperhindernis insbesondere ein Gitter, ein Netz oder ein Lochblech ist. Dadurch lässt sich verhindern, dass z. B. Laub oder Tiere bestimmter Größe, wie Vögel, in den Entlüftungskanal gelangen können und diesen verstopfen.

Gemäß einer weiteren Ausführungsform der vorliegenden Erfindung ist vorgesehen, dass die Fahrzeuglüftung zum temporären Verschließen des Entlüftungskanals einen Verschlussmechanismus, insbesondere eine Verschlussklappe, aufweist. Beispielsweise lässt sich die Verschlussklappe zum Verschließen verschwenken. Dadurch lässt sich der Entlüftungskanal bedarfsabhängig verschließen. Es ist z. B vorstellbar, dass der Entlüftungskanal automatisch geschlossen wird, wenn das Fahrzeug nicht bewegt wird bzw. in einem Parkzustand ist. Es ist auch vorstellbar, dass der Entlüftungskanal erst dann geöffnet wird, wenn ein Gebläse zur Scheibenenteisung aktiviert wird.

Gemäß einer weiteren Ausführungsform der vorliegenden Erfindung ist vorgesehen, dass die Einlassöffnung in einer Fahrzeuglängsrichtung des Fahrzeugs gesehen versetzt zur Auslassöffnung angeordnet ist und insbesondere die Auslassöffnung einem Fahrzeugende zugewandt ist. Durch die Ausrichtung der Auslassöffnung lässt sich in vorteilhafter Weise vermeiden, dass Fahrtwind in die Auslassöffnung gepresst wird und so einem Entlüften des Fahrzeuginnenraums entgegenwirken würde.

Gemäß einer weiteren Ausführungsform der vorliegenden Erfindung ist es vorgesehen, dass eine weitere Fahrzeuglüftung mit einem Entlüftungskanal, der eine Einlassöffnung und eine Auslassöffnung umfasst, vorgesehen ist, wobei die Einlassöffnung der weiteren Fahrzeuglüftung im Bereich eines oberen Endes einer Heckscheibe angeordnet ist. Hierbei ist es vorstellbar, dass der Entlüftungskanal in einem Heckspoiler oder einem vergleichbaren Fortsatz des Fahrzeugdachs angeordnet ist. Mittels der weiteren Fahrzeuglüftung lässt sich in vorteilhafter Weise ein vorzeitiger Abriss der Luftströmung zur Enteisung der Heckscheibe vermeiden.

Ein weiterer Gegenstand der vorliegenden Erfindung ist ein Fahrzeug, insbesondere ein Nutzfahrzeug, mit einer erfindungsgemäßen Fahrzeuglüftung. Insbesondere handelt es sich um einen Omnibus zur Personenbeförderung oder einen Lastkraftwagen mit einem Führerhaus, in das die Fahrzeuglüftung integriert ist. Wegen ihrer vergleichsweise großen Frontscheiben erweist sich die erfindungsgemäße Fahrzeuglüftung hier als besonders vorteilhaft.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Fahrzeug mit einer Fahrzeuglüftung gemäß einer beispielhaften Ausführungsform der vorliegenden Erfindung; und
- Figur 2: die Fahrzeuglüftung in einer Schnittansicht.

Gleiche Elemente sind in allen Figuren mit den gleichen Bezugszeichen versehen. Sich wiederholende Elemente sind zum Teil nicht in jeder Figur gesondert bezeichnet.

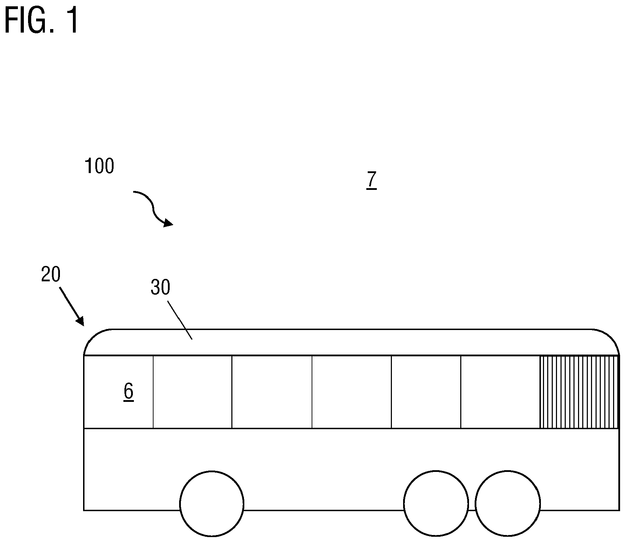

Die Figur 1 stellt ein Fahrzeug 100 mit einer Fahrzeuglüftung gemäß einer beispielhaften Ausführungsform der vorliegenden Erfindung dar. Konkret handelt es sich in diesem Ausführungsbeispiel um ein Nutzfahrzeug, insbesondere um einen Bus zur Personenbeförderung. Hierbei ist es vorgesehen, dass die Fahrzeuglüftung im Frontbereich des Fahrzeugs 100, d. h. in einem bei einer Vorwärtsfahrt in Fahrtrichtung gesehen vorderen Bereich, angeordnet ist. Insbesondere ist die Fahrzeuglüftung hierbei in eine Bugdachkuppel 20 eingelassen. Die Bugdachkuppel 20 bildet dabei vorzugsweise den bei der Vorwärtsfahrt in Fahrtrichtung gesehenen vordersten Bereich bzw. das vorderste Bauteil eines Fahrzugsdachs 30. Bei einer Vorwärtsfahrt ist die Bugdachkuppe 20 entsprechend dem Fahrtwind ausgesetzt und leitet diesen vorzugsweise nach oben ab. Mittels der Fahrzeuglüftung soll zum Entlüften eines Fahrzeuginnenraums 6 Luft aus dem Fahrzeuginnenraum 6 in eine das Fahrzeug 100 umgebende Fahrzeugumgebung 7 geleitet werden.

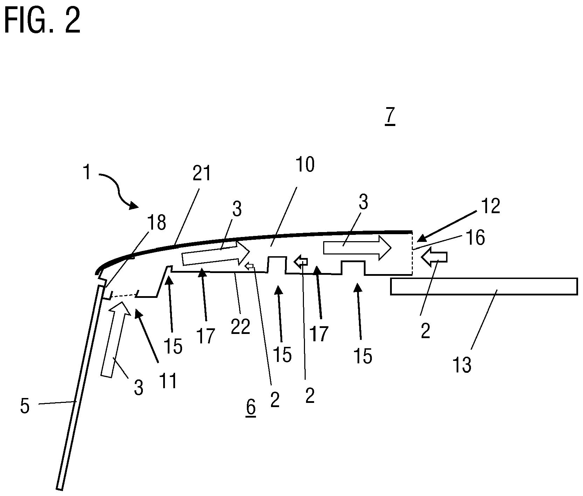

In Figur 2 ist die Fahrzeuglüftung 1 im Detail dargestellt. Hierbei ist es vorgesehen, dass die Fahrzeuglüftung 1 einen Entlüftungskanal 10 mit einer Einlassöffnung 11, die dem Fahrzeuginnenraum 6 zugewandt ist, und mit einer Auslassöffnung 12, die der Fahrzeugumgebung 7 zugewandt ist, umfasst. Über den Entlüftungskanal 10 wird der Fahrzeuginnenraum 6 entlüftet, indem ein Luftstrom 3 von der Einlassöffnung 11 zur Auslassöffnung 12 durch den Entlüftungskanal 10 geleitet wird. Um das Entlüften zu unterstützen, ist es insbesondere vorgesehen, dass das Fahrzeugdach 30, insbesondere die Bugdachkuppel 20, derart ausgestaltet ist, dass sich bei einer Vorwärtsfahrt an der Auslassöffnung 12 ein Unterdruck ausbildet, der einen Luftstrom 3 von der Einlassöffnung 11 zur Auslassöffnung 12 veranlasst bzw. unterstützt. Beispielsweise ist das Fahrzeugdach 30 bzw. die Bugdachkuppel 20 in einem Bereich zwischen einer Fahrzeugfront und der Auslassöffnung 12 derart ausgestaltet bzw. konvex gekrümmt, dass eine sich mit dem Fahrtwind einstellende Strömung außerhalb des Fahrzeugs 100 so konfiguriert ist, dass sich ein Druckunterschied zwischen der Einlassöffnung 11 und der Auslassöffnung 12 derart einstellt, dass Luft unter Bildung des Luftstroms 3 aus dem Fahrzeuginnenraum 6 über den Entlüftungskanal 10 in die Fahrzeugumgebung 7 geleitet wird. Folge ist, dass Luft aus dem Fahrzeuginnenraum 6 ohne zusätzliches Gebläse geführt werden kann. In der in Figur 2 dargestellten Ausführungsform wird der Entlüftungskanal 10 durch eine erste Schale, die eine der Fahrzeugumgebung 7 zugewandte Kanalwandung 21 bildet, und eine zweite Schale, die eine dem Fahrzeuginnenraum 6 zugewandte Kanalwandung 22 bildet, geformt, wobei die erste Schale und die zweite Schale im zusammengesetzten Zustand einen zwischen der ersten Schale und der zweiten Schale ausgebildeten Hohlraum als Entlüftungskanal 10 bereitstellen. Dabei ist es vorzugsweise vorgesehen, dass die zweite Schale mit einem Ende auf einer Fahrzeugdachauflage 13 aufliegt. Ferner ist es vorgesehen, dass die der Fahrzeugumgebung zugewandte erste Schale ein Teil des Fahrzeugdachs 30, insbesondere ein Teil des zur Einstellung der gewünschten Strömungsverhältnisse gekrümmten Fahrzeugdachbereichs, ist. Die zweite dem Fahrzeuginnenraum 6 zugewandte zweite Schale ist vorzugswiese strukturiert ausgestaltet, um ein System aus Wasserbarrieren 15 bereitzustellen. Beispielsweise sind die Wasserbarrieren 15 als Wölbungen in der zweiten Schale ausgestaltet. Den Wasserbarrieren 15 kommt insbesondere die Aufgabe zu, den Fahrzeuginnenraum 6 vor Wasser zu schützen. Hierzu ragen die Wasserbarrieren 15 beispielsweise in den Entlüftungskanal 10 derart hinein, dass ein im Entlüftungskanal 10 dem Luftstrom 3 entgegengesetzter Wasserstrom 2 die Wasserbarriere 15 nicht überwinden kann, solange ein Wasserpegel eine Höhe der Wasserbarriere 15 nicht überschreitet. Solange ein Wasserpegel die Wasserbarriere 15 nicht überwindet, wird das Wasser in Richtung des Wasserstroms gesehen vor der Wasserbarriere 15 gesammelt. Durch das System aus in Richtung des Wasserstroms 2 gesehen hintereinander angeordneten Wasserbarrieren 15 bildet sich zudem eine Senke 17 zwischen zwei Wasserbarrieren 15 aus, in der wiederum dasjenige Wasser gesammelt wird, das die in Richtung des Wasserstroms 2 vor der Senke liegende Wasserbarriere 15 hat überwinden können. In dem in Figur 2 dargestellten System aus Wasserbarrieren 15 bilden sich zwischen den drei Wasserbarrieren 15 zwei Senken 17 aus. Mit Hilfe von Abläufen lässt sich das Wasser dabei vorzugsweise von Sammelstellen, in denen sich Wasser sammelt und die z. B. in Richtung des Wasserstroms 2 gesehen vor der Wasserbarriere 15 bzw. in einer Senke 17 liegen, ableiteten. Zur Unterstützung des Ablaufens bzw. des Ableitens des Wassers ist das Fahrzeugdach 30 oder die zweite Schale in Fahrzeugquerrichtung gesehen geneigt ausgestaltet, insbesondere von einer Fahrzeugmitte ausgehend zur Fahrzeugseite hin geneigt. Insbesondere ist das Fahrzeugdach 30 oder die zweite Schale zur Fahrzeugseite hin nach unten geneigt ausgestaltet, so dass das gesammelte Wasser zur Fahrzeugseite abfließt. Um neben Wasser auch Fremdkörper, wie z. B. Laub oder Tiere bestimmter Größe, am Eindringen in den Fahrzeuginnenraum 6 bzw. am Verstopfen des Entlüftungskanals 10 zu hindern, ist es insbesondere vorgesehen, dass in der Auslassöffnung 12 in Form eines Gitters oder eines Lochblechs ein Fremdkörperhindernis 16 angeordnet ist. Weiterhin ist es vorgesehen, dass die Einlassöffnung 11 und die Auslassöffnung 12 in Fahrzeuglängsrichtung zueinander versetzt angeordnet sind und die Auslassöffnung 12 einem Fahrzeugende zugewandt ist. Insbesondere wird die Auslassöffnung 12 entlang einer senkrecht zur Fahrzeuglängsrichtung und senkrecht zur Fahrzeugquerrichtung verlaufenden Richtung von der zweiten Schale so überdeckt, dass der Fahrwind bei einer Vorwärtsfahrt vor einem Eindringen in den Entlüftungskanal 10 gehindert wird und die Auslassöffnung 12 vor einem direkten Regeneinfall geschützt ist.

Zur Unterstützung einer Scheibenenteisung ist es vorgesehen, dass die Einlassöffnung 11 im Bereich eines oberen Endes einer Frontscheibe 5 des Fahrzeugs 100 angeordnet ist. Dadurch wird Luft derart dem Fahrzeuginnenraum 6 entzogen, dass ein beim Enteisen der Frontscheibe genutzter Luftstrom, der mittels eines Gebläses auf ein unteres Ende der Frontscheibe 5 gerichtet ist und sich in Richtung des Fahrzeugdachs 30 entlang der Frontscheibe 5 im Fahrzeuginneren 6 erstreckt, nicht vorzeitig abreißt, sondern bis zum oberen Ende der Frontscheibe 5 aufrechtgehalten werden kann. Dies hat den positiven Effekt, dass auch der obere Bereich der Frontscheibe 5 enteist bzw. von einer eine Beschlagung der Frontscheibe verursachenden Feuchtigkeit befreit werden kann. Dabei ist es beispielsweise vorstellbar, dass die Einlassöffnung 11 unmittelbar an das obere Ende der Frontscheibe 5 angrenzt. Insbesondere wird die Auslassöffnung 12 zur einen Seite durch ein Auflageelement 18 für das oberen Ende der Frontscheibe 5 begrenzt. Hierbei liegt die Frontscheibe auf dem Auflageelement 18 auf.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeuglüftung
- 2: Wasserstrom
- 3: Luftstrom
- 5: Frontscheibe
- 6: Fahrzeuginnenraum
- 7: Fahrzeugumgebung
- 10: Entlüftungskanal
- 11: Einlassöffnung
- 12: Auslassöffnung
- 13: Fahrzeugdachauflage
- 15: Wasserbarriere
- 16: Fremdkörperhindernis
- 17: Senke
- 18: Auflageelement
- 20: Bugdachkuppel
- 21: Fahrzeugumgebung zugewandte Kanalwandung
- 22: Fahrzeuginnenraum zugewandte Kanalwandung
- 30: Fahrzeugdach
- 100: Fahrzeug

## Patentansprüche

1. Fahrzeug, insbesondere Nutzfahrzeug, mit einer Fahrzeuglüftung (1), insbesondere gebläsefreie Fahrzeuglüftung (1), zum Entlüften eines Fahrzeuginnenraums (6) des eines Fahrzeugs (100), wobei die Fahrzeuglüftung (1) zur Führung eines Luftstroms (3) einen in eine Fahrzeugwandung integrierten Entlüftungskanal (10) mit einer Einlassöffnung (11), die dem Fahrzeuginnenraum (6) zugewandt ist, und mit einer Auslassöffnung (12), die einer das Fahrzeug (100) umgebenden Fahrzeugumgebung (7) zugewandt ist, umfasst, wobei zur Unterstützung einer Frontscheibenenteisung die Einlassöffnung (11) in einem an eine Frontscheibe des Fahrzeuges angrenzenden Bereich angeordnet ist, **dadurch gekennzeichnet,**
**dass** der Entlüftungskanal (10) zum Schutz vor in den Fahrzeuginnenraum (6) tretendem Wasser zwischen der Einlassöffnung (11) und der Auslassöffnung (12) ein System aus mehreren Wasserbarrieren (15), insbesondere aus mehreren aufeinanderfolgenden Wasserbarrieren (15), aufweist, und,
**dass** eine Senke (17) zum Sammeln von Wasser zwischen Wasserbarrieren (15) des Systems aus mehreren Wasserbarrieren (15) ausgebildet ist.

2. Fahrzeug (100) mit einer Fahrzeuglüftung (1) nach Anspruch 1, wobei die Fahrzeugwandung Teil eines Fahrzeugdachs (30) ist und die Einlassöffnung (11) vorzugsweise in einem an einen oberen Endbereich der Frontscheibe (5) angrenzenden Bereich angeordnet ist.

3. Fahrzeug (100) mit einer Fahrzeuglüftung (1) nach einem der vorhergehenden Ansprüche, wobei zum Entlüften des Fahrzeuginnenraums (6) die Fahrzeugwandung und die Auslassöffnung (12) derart ausgestaltet sind, dass sich bei einer Vorwärtsfahrt ein Unterdruck an der Auslassöffnung (12) ausbildet.

4. Fahrzeug (100) mit einer Fahrzeuglüftung (1) nach einem der vorhergehenden Ansprüche, wobei zur Unterstützung eines sich bei einer Vorwärtsfahrt ausbildenden Druckunterschieds zwischen der Fahrzeugumgebung (7) im Bereich der Einlassöffnung (11) und dem Fahrzuginnenraum (6) im Bereich der Auslassöffnung (12) eine Außenseite der Fahrzeugwandung, insbesondere eine der Fahrzeugumgebung (7) zugewandte Kanalwandung (21) des Entlüftungskanals (10), konvex gekrümmt ist.

5. Fahrzeug (100) mit einer Fahrzeuglüftung (1) nach Anspruch 2, wobei die Fahrzeuglüftung (1) in eine Bugdachkuppel des Fahrzeugs (100) integriert ist.

6. Fahrzeug (100) mit einer Fahrzeuglüftung (1) nach einem der vorhergehenden Ansprüche wobei sich die Einlassöffnung (11) an der Frontscheibe (5) über mehr als 50 %, bevorzugt über mehr als 60 % und besonders bevorzugt über mehr als 75 % einer Länge einer Frontscheibenkante erstreckt, wobei die Einlassöffnung (11) insbesondere entlang einer durch die Frontscheibenkante vorgegebenen Richtung durchgehend oder unterbrochen ausgestaltet ist.

7. Fahrzeug (100) mit einer Fahrzeuglüftung (1) nach Anspruch 6, wobei zur Bildung der Wasserbarrieren (15) eine dem Fahrzeuginnenraum (6) zugewandte Kanalwandung (22) gewölbt ist, insbesondere in den Entlüftungskanal (10) hineinragend gewölbt ist, oder einen in den Entlüftungskanal (10) hineinragenden Vorsprung aufweist.

8. Fahrzeug (100) mit einer Fahrzeuglüftung (1) nach einem der vorhergehenden Ansprüche, wobei der Entlüftungskanal (10) zur Drainage des durch die Wasserbarrieren gesammelten Wassers einen Ablauf, z. B. in Form eines Schlauchs, eines Drainagekanals und/oder eines Rillensystems, aufweist, wobei insbesondere die dem Fahrzeuginnenraum (6) zugewandte Kanalwandung (22) zur Unterstützung des Ablaufs schräg gegenüber einer horizontalen Ebene verläuft.

9. Fahrzeug (100) mit einer Fahrzeuglüftung nach einem der Ansprüche 7 bis 8, wobei die Fahrzeuglüftung (1) eine der Fahrzeugumgebung (7) zugewandte erste Schale und eine dem Fahrzeuginnenraum (6) zugewandte zweite Schale umfasst, wobei insbesondere die der Fahrzeugumgebung (7) zugewandte erste Schale einen Teil der Fahrzeugwandung und die dem Fahrzeuginnenraum (6) zugewandte zweite Schale zur Ausbildung der Wasserbarrieren strukturiert ist.

10. Fahrzeug (100) mit einer Fahrzeuglüftung (1) nach einem der vorhergehenden Ansprüche, wobei im Bereich der Auslassöffnung (12) oder in der Auslassöffnung (12) ein Fremdkörperhindernis (16) zur Vermeidung eines Eindringens von Fremdkörpern in den Entlüftungskanal (10) angeordnet ist, wobei das Fremdkörperhindernis (16) insbesondere ein Gitter, ein Netz oder ein Lochblech ist.

11. Fahrzeug (100) mit einer Fahrzeuglüftung (1) nach einem der vorhergehenden Ansprüche, wobei die Fahrzeuglüftung (1) zum temporären Verschließen des Entlüftungskanals (10) einen Verschlussmechanismus, insbesondere eine Verschlussklappe, aufweist.

12. Fahrzeug (100) mit einer Fahrzeuglüftung (1) nach einem der vorhergehenden Ansprüche, wobei die Einlassöffnung (11) in einer Fahrzeuglängsrichtung gesehen versetzt zur Auslassöffnung (12) angeordnet ist und insbesondere die Auslassöffnung (12) einem Fahrzeugende zugewandt ist.

## Claims

1. A vehicle, in particular utility vehicle, having vehicle ventilation (1), in particular blower-free vehicle ventilation (1), for ventilating a vehicle interior (6) of the vehicle (100), wherein in order to guide an air flow (3), the vehicle ventilation (1) comprising a ventilation channel (10) integrated in a vehicle wall and having an inlet opening (11) which faces the vehicle interior (6), and having an outlet opening (12) which faces vehicle surroundings (7) around the vehicle (100), the inlet opening (11) being arranged in a region adjoining a front window of the vehicle to assist front window de-icing, **characterized**
**in that** for protection against water entering the vehicle interior (6), the ventilation channel (10) has a system of multiple water barriers (15), in particular of multiple water barriers (15) following one another, between the inlet opening (11) and the outlet opening (12), and
**in that** a sump (17) for collecting water is formed between water barriers (15) of the system of multiple water barriers (15).

2. The vehicle (100) having vehicle ventilation (1) according to Claim 1, wherein the vehicle wall is part of a vehicle roof (30) and the inlet opening (11) is preferably arranged in a region adjoining an upper end region of the front window (5).

3. The vehicle (100) having vehicle ventilation (1) according to one of the preceding claims, wherein, to ventilate the vehicle interior (6), the vehicle wall and the outlet opening (12) are configured in such a way that during forward travel a negative pressure is formed at the outlet opening (12).

4. The vehicle (100) having vehicle ventilation (1) according to one of the preceding claims, wherein to assist a pressure difference, forming during forward travel, between the vehicle surroundings (7) in the region of the inlet opening (11) and the vehicle interior (6) in the region of the outlet opening (12), an outer side of the vehicle wall, in particular a channel wall (21) of the ventilation channel (10) that faces the vehicle surroundings (7), is convexly curved.

5. The vehicle (100) having vehicle ventilation (1) according to Claim 2, wherein the vehicle ventilation (1) is integrated into a front roof dome of the vehicle (100).

6. The vehicle (100) having vehicle ventilation (1) according to one of the preceding claims, wherein the inlet opening (11) extends on the front window (5) over more than 50%, preferably over more than 60% and particularly preferably over more than 75% of a length of a front window edge, wherein the inlet opening (11) is in particular configured to be continuous or interrupted along a direction predefined by the front window edge.

7. The vehicle (100) having vehicle ventilation (1) according to Claim 6, wherein, to form the water barriers (15), a channel wall (22) facing the vehicle interior (6) is curved, in particular is curved so as to project into the ventilation channel (10), or has a projection projecting into the ventilation channel (10).

8. The vehicle (100) having vehicle ventilation (1) according to one of the preceding claims, wherein for drainage of the water collected by the water barriers, the ventilation channel (10) has a drain, for example in the form of a hose, a drainage channel and/or a gutter system, wherein in particular the channel wall (22) that faces the vehicle interior (6) extends at an angle with respect to a horizontal plane in order to assist the drainage.

9. The vehicle (100) having vehicle ventilation according to one of Claims 7 to 8, wherein the vehicle ventilation (1) comprises a first shell facing the vehicle surroundings (7) and a second shell facing the vehicle interior (6), wherein in particular the first shell, which faces the vehicle surroundings (7), is part of the vehicle wall, and the second shell, which faces the vehicle interior (6), is structured to form the water barriers.

10. The vehicle (100) having vehicle ventilation (1) according to one of the preceding claims, wherein a foreign body obstacle (16) for avoiding penetration of foreign bodies into the ventilation channel (10) is arranged in the region of the outlet opening (12) or in the outlet opening (12), wherein the foreign body obstacle (16) is in particular a grid, a net or a perforated plate.

11. The vehicle (100) having vehicle ventilation (1) according to one of the preceding claims, wherein the vehicle ventilation (1) has a closure mechanism, in particular a closure flap, for the temporary closure of the ventilation channel (10).

12. The vehicle (100) having vehicle ventilation (1) according to one of the preceding claims, wherein, as seen in a vehicle longitudinal direction, the inlet opening (11) is offset relative to the outlet opening (12), and in particular the outlet opening (12) faces a vehicle end.

## Revendications

1. Véhicule, en particulier véhicule utilitaire, doté d'une ventilation de véhicule (1), en particulier d'une ventilation de véhicule sans soufflante (1), pour la ventilation d'un espace intérieur de véhicule (6) du véhicule (100), dans lequel la ventilation de véhicule (1) comprend pour le guidage d'un courant d'air (3) un canal de ventilation (10) intégré dans une paroi de véhicule avec une ouverture d'entrée (11), qui est tournée vers l'espace intérieur de véhicule (6), et avec une ouverture de sortie (12), qui est tournée vers un environnement de véhicule (7) entourant le véhicule (100), dans lequel l'ouverture d'entrée (11) est disposée dans une région adjacente au pare-brise du véhicule afin de contribuer au dégivrage du pare-brise, **caractérisé en ce que** le canal de ventilation (10) présente, pour la protection contre la pénétration d'eau dans l'espace intérieur de véhicule (6), entre l'ouverture d'entrée (11) et l'ouverture de sortie (12) un système composé de plusieurs retenues d'eau (15), en particulier de plusieurs retenues d'eau successives (15), et **en ce qu'**une cuvette (17) de collecte de l'eau est formée entre des retenues d'eau (15) du système de plusieurs retenues d'eau (15).

2. Véhicule (100) doté d'une ventilation de véhicule (1) selon la revendication 1, dans lequel la paroi de véhicule fait partie d'un toit de véhicule (30) et l'ouverture d'entrée (11) est disposée de préférence dans une région adjacente à une région d'extrémité supérieure du pare-brise (5).

3. Véhicule (100) doté d'une ventilation de véhicule (1) selon l'une quelconque des revendications précédentes, dans lequel la paroi de véhicule et l'ouverture de sortie (12) sont configurées, pour la ventilation de l'espace intérieur de véhicule (6), de telle manière qu'il apparaisse une dépression à l'ouverture de sortie (12) pendant une circulation vers l'avant.

4. Véhicule (100) doté d'une ventilation de véhicule (1) selon l'une quelconque des revendications précédentes, dans lequel, pour soutenir une différence de pression apparaissant pendant une circulation vers l'avant entre l'environnement de véhicule (7) dans la région de l'ouverture d'entrée (11) et l'espace intérieur de véhicule (6) dans la région de l'ouverture de sortie (12), un côté extérieur de la paroi de véhicule, en particulier une paroi de canal (21) du canal de ventilation (10) tournée vers l'environnement de véhicule (7), présente une courbure convexe.

5. Véhicule (100) doté d'une ventilation de véhicule (1) selon la revendication 2, dans lequel la ventilation de véhicule (1) est intégrée dans un dôme surhaussé du véhicule (100).

6. Véhicule (100) doté d'une ventilation de véhicule (1) selon l'une quelconque des revendications précédentes, dans lequel l'ouverture d'entrée (11) s'étend au pare-brise (5) sur plus de 50 %, de préférence sur plus de 60 % et de préférence encore sur plus de 75 % de la longueur d'un bord de pare-brise, dans lequel l'ouverture d'entrée (11) est en particulier continue ou interrompue le long d'une direction prédéterminée par le bord de pare-brise.

7. Véhicule (100) doté d'une ventilation de véhicule (1) selon la revendication 6, dans lequel une paroi de canal (22) tournée vers l'espace intérieur de véhicule (6) est bombée pour la formation des retenues d'eau (15), en particulier bombée en pénétrant dans le canal de ventilation (10), ou présente une saillie pénétrant dans le canal de ventilation (10).

8. Véhicule (100) doté d'une ventilation de véhicule (1) selon l'une quelconque des revendications précédentes, dans lequel le canal de ventilation (10) présente, pour le drainage de l'eau accumulée par les retenues d'eau, une évacuation par exemple sous la forme d'un tuyau flexible, d'un canal de drainage ou d'un système de rainures, dans lequel en particulier la paroi de canal (22) tournée vers l'espace intérieur de véhicule (6) s'étend en oblique par rapport à un plan horizontal afin de contribuer à l'évacuation.

9. Véhicule (100) doté d'une ventilation de véhicule (1) selon l'une quelconque des revendications 7 à 8, dans lequel la ventilation de véhicule (1) comprend une première coque tournée vers l'environnement de véhicule (7) et une seconde coque tournée vers l'espace intérieur de véhicule (6), dans lequel en particulier la première coque tournée vers l'environnement de véhicule (7) est une partie de la paroi de véhicule et la seconde coque tournée vers l'espace intérieur de véhicule (6) est structurée pour former les retenues d'eau.

10. Véhicule (100) doté d'une ventilation de véhicule (1) selon l'une quelconque des revendications précédentes, dans lequel un obstacle pour des corps étrangers (16) est disposé dans la région de l'ouverture de sortie (12) ou dans l'ouverture de sortie (12) pour empêcher une pénétration de corps étrangers dans le canal de ventilation (10), dans lequel l'obstacle pour des corps étrangers (16) est en particulier une grille, un filet ou une tôle perforée.

11. Véhicule (100) doté d'une ventilation de véhicule (1) selon l'une quelconque des revendications précédentes, dans lequel la ventilation de véhicule (1) présente un mécanisme de fermeture, en particulier un volet de fermeture, pour la fermeture temporaire du canal de ventilation (10).

12. Véhicule (100) doté d'une ventilation de véhicule (1) selon l'une quelconque des revendications précédentes, dans lequel l'ouverture d'entrée (11), vue dans la direction longitudinale du véhicule, est disposée de façon décalée par rapport à l'ouverture de sortie (12) et en particulier l'ouverture de sortie (12) est tournée vers une extrémité du véhicule.
